# EUROPÄISCHE PATENTSCHRIFT

(11) **EP 1 222 729 B1**
(45) Veröffentlichungstag und Bekanntmachung des Hinweises auf die Patenterteilung: **15.08.2012**
(21) Anmeldenummer: 01953116.9
(22) Anmeldetag: 29.06.2001
(51) Int. Cl.: H02K 7/116, H02K 11/00, G01D 11/24, G01D 5/165

(54) **VERSTELLANTRIEB MIT EINSTELLBAREM POTENTIOMETER**
ADJUSTMENT DRIVE WITH AN ADJUSTABLE POTENTIOMETER
MECANISME AJUSTABLE A POTENTIOMETRE REGLABLE

(30) Priorität: 01.07.2000 DE 10032187
(43) Veröffentlichungstag der Anmeldung: 17.07.2002
(73) Patentinhaber: ROBERT BOSCH GMBH, 70442 Stuttgart (DE)
(72) Erfinder: REEB, Wolfgang, 77833 Ottersweier Hatzenweier (DE); DIEBOLD, Bernd, E-08190 Sant Cugat (ES); SCHEMEL, Hans-Peter, 77815 Buehl (ES)
(86) Internationale Anmeldenummer: PCT/DE2001/002359
(87) Internationale Veröffentlichungsnummer: WO 2002/003529

(56) Entgegenhaltungen:
- US-A- 4 950 965
- US-A- 5 990 586
- PATENT ABSTRACTS OF JAPAN vol. 008, no. 094 (M-293), 28. April 1984 (1984-04-28) & JP 59 008544 A (KOITO SEISAKUSHO KK), 17. Januar 1984 (1984-01-17)

## Beschreibung

### Stand der Technik

Die Erfindung geht aus von einem Verstellantrieb nach der Gattung des Anspruchs 1.

Aus der EP 681 359 A1 ist ein Verstellantrieb bekannt, der eine elektrische Schaltung hat. Dieser Verstellantrieb hat jedoch kein Potentiometer, das einen sehr genauen Abgleich zwischen einer beliebigen Stellung eines Abtriebsrads und einer daraus sich ergebenden Stellung des Potentiometers mittels des Potentiometergehäuses ermöglicht, so dass sich das Potentiometer in einer Ausgangsstellung befindet.

Aus der US-PS 5 794 766 ist ein Potentiometer bekannt. Das Potentiometer kann jedoch gegenüber einer Basisplatte nicht gedreht werden, um einen oben beschriebenen Abgleich durchzuführen.

Die US-PS 5 580 278 zeigt eine Rastverzahnung, die jedoch nicht verdreht werden kann.

Aus der JP 59 008544 A ist eine Verstellvorrichtung für eine Autoscheinwerfer bekannt, die in einem Gehäuse untergebracht ist, in welchem sich zudem ein Elektromotor, ein Verstellrad und ein Potentiometer befinden, wobei jedoch zwischen dem Gehäuse und dem Potentiometer eine drehfeste Verbindung besteht.

Schließlich ist in der US 4 950 965 A ein Verstellantrieb für eine Drosselklappe eines Kraftfahrzeugs mit einem linearen Potentiometer offenbart.

### Vorteile der Erfindung

Die Erfindung gemäß Anspruch 1 betrifft einen Verstellantrieb, der zumindest aus einem Gehäuse, einem Abtriebsrad, einem Elektromotor und einem Potentiometer besteht, wobei der Elektromotor mittelbar mit dem Abtriebsrad gekoppelt ist, das eine Verstellung des Potentiometers bewirkt, und wobei das Potentiometer in einem am Gehäuse angeordneten Potentiometergehäuse angeordnet ist. Erfindungsgemäß ist vorgesehen, dass das Potentiometergehäuse zumindest einen Rastzahn und das Gehäuse zumindest einen Rastvorsprung haben, wobei der zumindest eine Rastvorsprung mit dem zumindest einen Rästzahn des Potentiometergehäuses derart eine Rastverzahnung bildet, dass das Potentiometergehäuse gegenüber dem Gehäuse verdrehbar ist. Damit können gegenüber dem Stand der Technik in vorteilhafter Weise fertigungstechnische Toleranzen des Potentiometers ausgeglichen werden.

Durch die in den abhängigen Ansprüchen aufgeführten Maßnahmen sind vorteilhafte Weiterbildungen und Verbesserungen des im Anspruch 1 genannten Verstellantriebs möglich.

Eine vorteilhafte Ausbildung der Erfindung ist durch ein Langloch im Potentiometergehäuse gegeben, weil dadurch die Rastverzahnung elastisch ausgelegt ist und ein Verdrehen des Gehäuses beim Abgleich erleichtert wird.

Weiterhin vorteilhaft ist es, dass elektrische Verwindungen des Potentiometers eine Schlangenkontur bilden, da dadurch ein notwendiger Längenausgleich beim Verdrehen des Potentiometergehäuses möglich ist

Besonders vorteilhaft ist es, wenn alle in das Gehäuse des Verstellantriebs einzubauenden Teile in einer Einbaurichtung in das Gehäuse einbaubar sind, weil dadurch die Montage vereinfacht und verkürzt wird.

Eine vorteilhafte Montage des Verstellantriebs ist dadurch ermöglicht, dass ein Elektromotor und/oder die Querschnecke in das Gehäuse des Verstellantriebs einsteckbar sind.

Weiterhin vorteilhaft ist es, dass das axiale Spiel einer Rotorwelle des Elektromotors über eine Blattfeder gedämpft ist.

### Zeichnung

Ein Ausführungsbeispiel der Erfindung ist in der Zeichnung vereinfacht dargestellt und in der nachfolgenden Beschreibung näher erläutert.

Es zeigen
Figur 1 einen erfindungsgemäß ausgebildeten Verstellantrieb,
Figur 2 ein Potentiometer mit Potentiometergehäuse und
Figur 3 ein Abtriebsrad.

### Beschreibung des Ausführungsbeispiels

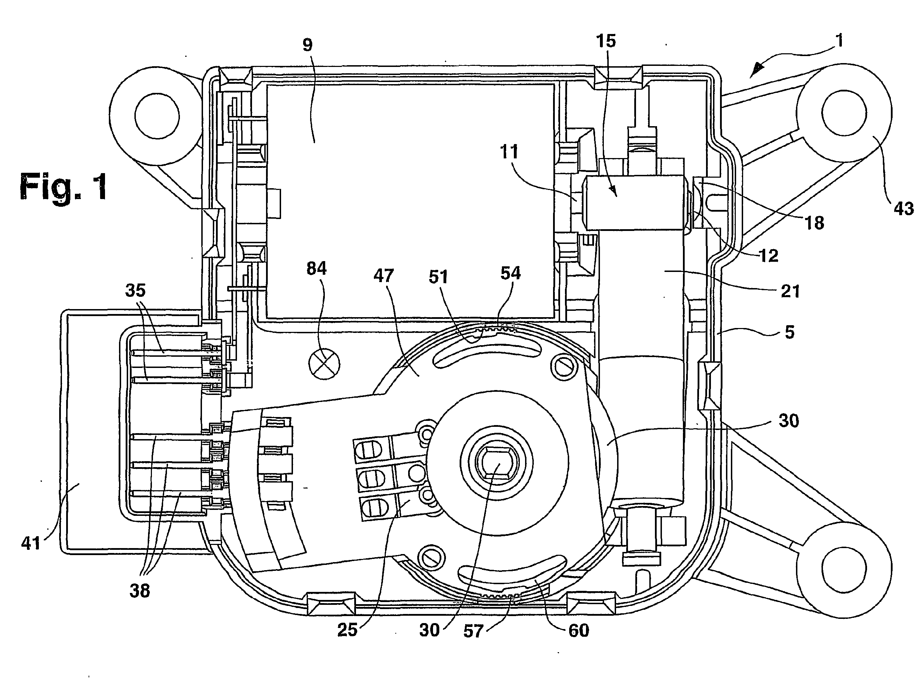

Figur 1 zeigt einen Verstellantrieb 1, der beispielsweise aus einem Gehäuse 5, einem Elektromotor 9, der eine Rotorwelle 11 hat, an deren Ende 12 ein Schneckengetriebe 15 angeordnet ist, besteht.

Das axiale Spiel der Rotorwelle 11 wird durch eine Blattfeder 18, die beispielsweise mit dem Gehäuse 5 einteilig ist, gedämpft. Das Schneckengetriebe 15 ist mit einer Querschnecke 21 gekoppelt. Die Querschnecke 21 ist beispielsweise in das Gehäuse 5 eingeklipst. Die Querschnecke 21 ist mit einem Abtriebsrad 30 gekoppelt. Das Abtriebsrad 30 ist unmittelbar mit einem Potentiometer 25 verbunden.

Wenn die Rotorwelle 11 sich dreht, bewirkt dies eine Drehung des Abtriebsrads 30 um eine Achse, die senkrecht aus der Zeichenebene hervorsteht. Diese Verdrehung des Abtriebsrads 30 und damit des Potentiometers 25 kann über eine elektrische leitende Potentiometerverbindung 38 abgegriffen werden. Der Elektromotor 9 hat ebenfalls elektrische Motorverbindungen 35, die bspw. zusammen mit den Potentiometerverbindungen 38 in einem Steckergehäuse 41 angeordnet sind. Das Gehäuse 5 kann mit Befestigungselementen 43 auf einem weiteren Bauteil befestigt werden. Die Potentiometerverbindungen 38 sind beispielsweise in das Gehäuse 5 in der Nähe des Steckergehäuses 41 eingeklipst.

Das Potentiometer 25 ist in einem Potentiometergehäuse 47 angeordnet. Im wesentlichen besteht das Potentiometer 25 aus einer elektrisch leitenden Schleife (nicht gezeigt) und einem elektrischen Abgriff (nicht gezeigt), bspw. einem Schleifer. Die Schleife ist im Potentiometergehäuse 47 bspw. eingebettet. Die Stellung des Abgriffs bezüglich der Schleife wird entweder durch Drehung des Abtriebrads 30 oder des Potentiometergehäuses 47 verändert.

Das Potentiometergehäuse 47 hat an seinem Umfang zumindest einen Rastzahn 51 und das Gehäuse 5 hat beispielsweise zumindest einen Rastvorsprung 54. Beim Einbau des Potentiometergehäuses 47 in das Gehäuse 5 bilden der zumindest eine Rastzahn 51 und der zumindest eine Rastvorsprung 54 eine Rastverzahnung 57.

Nach dem Einbau des Potentiometergehäuses 47 mit dem Potentiometer 25 soll eine bestimmte Ausgangsstellung des Abgriffs bezüglich der Schleife des Potentiometers 25 vorhanden sein. Dies kann eine Stellung am Anfang oder Ende der Schleife oder eine Mittelstellung sein. Dabei ist aber die Stellung des Abtriebsrads 30 bspw. durch einen äusseren Stellhebel vorgegeben und damit die Stellung des Abgriffs des Potentiometers 25. Um die Ausgangsstellung zu erreichen, kann also nicht der Motor 9 so gedreht werden, dass eine Ausgangsstellung erreicht wird, da dies eine Verdrehung des Abtriebsrads 30 zur Folge hätte. Es muss deswegen das Potentiometergehäuse 47 unter Überwindung der Rastverzahnung 57 mit der Schleife um eine zur Zeichenebene senkrecht stehende Achse gedreht werden, bis eine vorbestimmte Ausgangsstellung erreicht wird, weil dies keine Verdrehung des Abtriebsrads 30 zur Folge hat. So können fertigungsbedingte Toleranzen des Potentiometers 25 ausgeglichen werden.

Das Potentiometergehäuse 47 hat deshalb beispielsweise in der Nähe des zumindest einen Rastzahns 51 zumindest ein Langloch 60, das die Wandung mit dem zumindest einem Rastzahn 51 des Potentiometergehäuses 47 zumindest teilweise elastisch gestaltet und ein Verdrehen des Potentiometergehäuses 47 bei Überwindung der Rastverzahnung 57 durch bspw. manuelle Krafteinwirkung ermöglicht. Während den mechanischen Belastungen, denen das Potentiometergehäuse bspw. in einem Kraftfahrzeug ausgesetzt ist, ist das Potentiometergehäuse 47 durch die Rastverzahnung 57 ausreichend gegen ein Verdrehen gesichert.

Nach dem Einbau des Elektromotors 9, der Querschnecke 21, des Abtriebsrads 30 und des Potentiometers 25 mit dem Potentiometergehäuse 47 in das Gehäuse 5 in einer Einbaurichtung 84 wird über einen elektrischen Abgriff an den Potentiometerverbindungen 38 festgestellt, ob das Potentiometer 25 sich in der Ausgangsstellung befindet. Ist dies nicht der Fall, so wird das Potentiometergehäuse 47 um einen positiven oder negativen Winkel gegen den Widerstand der Rastverzahnung 57 verdreht, das unmittelbar eine Verdrehung des Potentiometers 25 bewirkt, bis sich das Potentiometer 25 in einer vorbestimmten Ausgangsstellung befindet, d.h. ein Nullabgleich vorhanden ist.

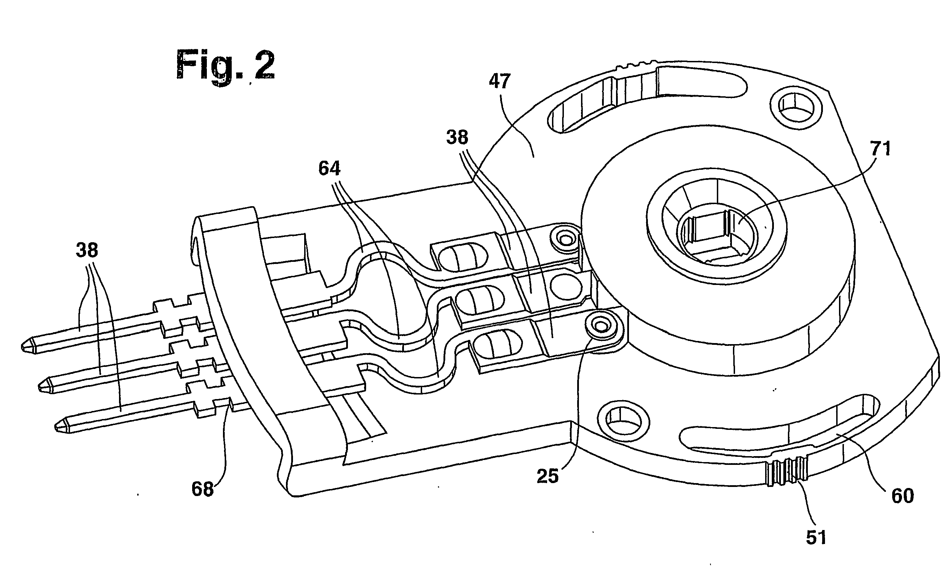

Figur 2 zeigt das Potentiometergehäuse 47 mit dem Potentiometer 25.

Die Potentiometerverbindungen 38 sind wellenförmig ausgebildet, haben also eine Schlangenkontur 64, die einen notwendigen Längenausgleich beim Verdrehen des Potentiometergehäuses 47 gewährleisten, da die Schlangenkontur 64 eine Dehnung oder Stauchung der Potentiometerverbindungen 38 sehr leicht ermöglicht. Die Potentiometerverbindungen 38 haben beispielsweise eine Einkerbung 68, die ein Einklipsen der

Potentiometerverbindungen 38 in das Gehäuse 5 ermöglichen und eine feste Stellung der Ende der

Potentiometerverbindungen 38 im Stecker 41 gewährleisten. Das Potentiometergehäuse 47 hat ein Formloch 71, in das das Abtriebsrad 30, bspw. mit einem Zweiflach, eingreift. Der Aufbau eines Potentiometers 25 ist dem Fachmann beispielsweise aus der US-PS 5,794,766 bekannt und soll Teil der Offenbarung sein.

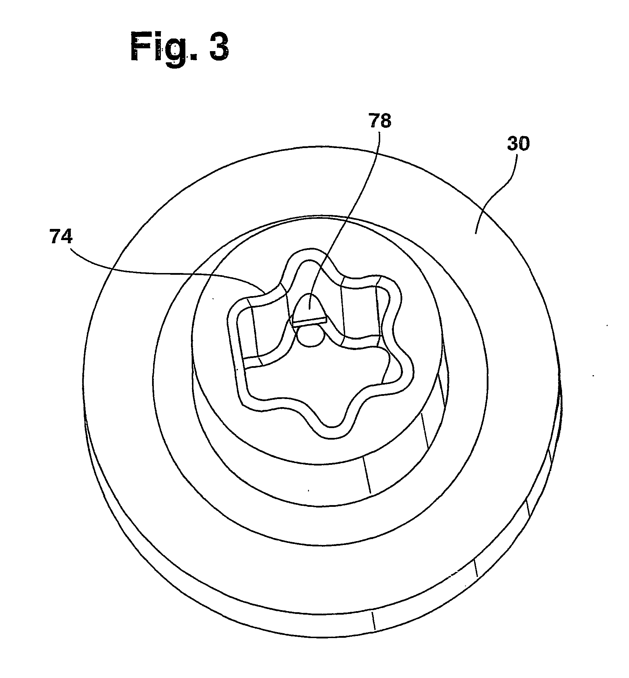

Figur 3 zeigt das Abtriebsrad 30. Das Abtriebsrad 30 hat mittig eine Formbohrung, die beispielsweise eine Torxform hat. Dies ermöglicht die radiale Fixierung eines mit einem kongruent ausgebildeten Ansatz versehenen Stellhebels und dessen eindeutige Lagezuordnung. In der Formbohrung 74 ist beispielsweise weiterhin ein Hinterschnitt 78 vorhanden, der zur Verrastung des Ansatzes des Stellhebels dient, d.h. der Hinterschnitt 78 bildet eine axiale Fixierung.

## Patentansprüche

1. Verstellantrieb (1), der zumindest aus einem Gehäuse (5), einen Abtriebsrad (30), einem Elektromotor (9) und einem Potentiometer (25) besteht, wobei der Elektromotor (9) mittelbar mit dem Abtriebsrad (30) gekoppelt ist, das eine Verstellung des Potentiometers (25) bewirkt, und wobei das Potentiometer (25) in einem am Gehäuse (5) angeordneten Potentiometergehäuse (47) angeordnet ist, **dadurch gekennzeichnet, dass** das Potentiometergehäuse (47) zumindest einen Rastzahn (51) und das Gehäuse (5) zumindest einen Rastvorsprung (54) haben, wobei der zumindest eine Rastvorsprung (54) mit dem zumindest einen Rastzahn (51) des Potentiometergehäuses (47) derart eine Rastverzahnung (57) bildet, dass das Potentiometergehäuse (47) gegenüber dem Gehäuse (5) verdrehbar ist.

2. Verstellantrieb nach Anspruch 1, **dadurch gekennzeichnet, dass** das Potentiometer (25) zur Erfassung einer Stellung des Abtriebsrads (30) dient.

3. Verstellantrieb nach Anspruch 1, **dadurch gekennzeichnet, dass** in dem Potentiometergehäuse (47) in der Nähe des zumindest einen Rastzahns (51) zumindest ein Langloch (60) angeordnet ist.

4. Verstellantrieb nach Anspruch 1, **dadurch gekennzeichnet, dass** der Elektromotor (9) eine Rotorwelle (11) hat, an deren einem Ende (12) ein Schneckengetriebe (15) angeordnet ist, dass das Schneckengetriebe (15) mit einer Querschnecke (21) im Gehäuse (5) gekoppelt ist, dass die Querschnecke (21) mit dem Abtriebsrad (30) kämmt.

5. Verstellantrieb nach Anspruch 1, **dadurch gekennzeichnet, dass** der Verstellantrieb (1) elektrische Verbindungen hat, dass die elektrischen Verbindungen zum Teil aus elektrischen Potentiometerverbindungen (38) bestehen, und dass die Potentiometerverbindungen (38) zumindest teilweise ähnlich eine Schlangenkontur (64) ausgebildet sind.

6. Verstellantrieb nach Anspruch 1, **dadurch gekennzeichnet, dass** alle in das Gehäuse (5) einzubauenden Teile in einer Einbaurichtung (84) in das Gehäuse (5) einbaubar sind.

7. Verstellantrieb nach einem oder mehreren der Ansprüche 1 oder 4, **dadurch gekennzeichnet, dass** der Elektromotor (9) in das Gehäuse (5) einsteckbar ist.

8. Verstellantrieb nach Anspruch 4, **dadurch gekennzeichnet**, die Querschnecke (21) in das Gehäuse (5) einsteckbar ist.

9. Verstellantrieb nach Anspruch 4, **dadurch gekennzeichnet, dass** das axiale Spiel der Rotorwelle (11) über eine Blattfeder (18) gedämpft ist.

## Claims

1. Adjustment drive (1), which comprises at least a housing (5), an output drive wheel (30), an electric motor (9) and a potentiometer (25), the electric motor (9) being coupled indirectly to the output drive wheel (30), which causes an adjustment of the potentiometer (25), and the potentiometer (25) being arranged in a potentiometer housing (47) arranged on the housing (5), **characterized in that** the potentiometer housing (47) has at least one latching tooth (51) and the housing (5) has at least one latching projection (54), the at least one latching projection (54) with the at least one latching tooth (51) of the potentiometer housing (47) forming a latching gearing (57) such that the potentiometer housing (47) is rotatable with respect to the housing (5).

2. Adjustment drive according to Claim 1, **characterized in that** the potentiometer (25) serves to detect a position of the output drive wheel (30).

3. Adjustment drive according to Claim 1, **characterized in that** at least one slot (60) is arranged in the potentiometer housing (47) in the vicinity of the at least one latching tooth (51).

4. Adjustment drive according to Claim 1, **characterized in that** the electric motor (9) has a rotor shaft (11), with a worm gear (15) arranged at one end (12) of said rotor shaft, **in that** the worm gear (15) is coupled to a transverse worm (21) in the housing (5), and **in that** the transverse worm (21) meshes with the output drive wheel (30).

5. Adjustment drive according to Claim 1, **characterized in that** the adjustment drive (1) has electrical connections, **in that** the electrical connections partially comprise electrical potentiometer connections (38), and **in that** the potentiometer connections (38) are formed so as to be at least partially similar to a serpentine contour (64).

6. Adjustment drive according to Claim 1, **characterized in that** all of the parts to be installed in the housing (5) can be installed in the housing (5) in an installation direction (84).

7. Adjustment drive according to one or more of Claims 1 and 4, **characterized in that** the electric motor (9) can be plugged into the housing (5).

8. Adjustment drive according to Claim 4, **characterized in that** the transverse worm (21) can be plugged into the housing (5).

9. Adjustment drive according to Claim 4, **characterized in that** the axial play of the rotor shaft (11) is damped via a leaf spring (18).

## Revendications

1. Mécanisme de réglage (1), qui se compose d'au moins un boîtier (5), une roue de sortie (30), un moteur électrique (9) et un potentiomètre (25), le moteur électrique (9) étant accouplé de manière indirecte à la roue de sortie (30) qui provoque un réglage du potentiomètre (25), le potentiomètre (25) étant disposé dans un boîtier de potentiomètre (47) disposé sur le boîtier (5), **caractérisé en ce que** le boîtier de potentiomètre (47) présente au moins une dent d'encliquetage (51) et le boîtier (5) présente au moins une saillie d'encliquetage (54), l'au moins une saillie d'encliquetage (54) formant avec l'au moins une dent d'encliquetage (51) du boîtier de potentiomètre (47) une denture d'encliquetage (57) de telle sorte que le boîtier de potentiomètre (47) puisse tourner par rapport au boîtier (5).

2. Mécanisme de réglage selon la revendication 1, **caractérisé en ce que** le potentiomètre (25) sert à la détection d'une position de la roue de sortie (30).

3. Mécanisme de réglage selon la revendication 1, **caractérisé en ce que** dans le boîtier de potentiomètre (47) est disposé au moins un trou oblong (60) à proximité de l'au moins une dent d'encliquetage (51).

4. Mécanisme de réglage selon la revendication 1, **caractérisé en ce que** le moteur électrique (9) présente un arbre de rotor (11), à une extrémité (12) duquel est disposé un engrenage à vis sans fin (15), **en ce que** l'engrenage à vis sans fin (15) est accouplé à une vis sans fin transversale (21) dans le boîtier (5), et **en ce que** la vis sans fin transversale (21) s'engrène avec la roue de sortie (30).

5. Mécanisme de réglage selon la revendication 1, **caractérisé en ce que** le mécanisme de réglage (1) présente des connexions électriques, **en ce que** les connexions électriques se composent en partie de connexions électriques de potentiomètre (38), et **en ce que** les connexions de potentiomètre (38) sont réalisées au moins en partie de manière similaire à un contour en serpentin (64).

6. Mécanisme de réglage selon la revendication 1, **caractérisé en ce que** toutes les pièces à installer dans le boîtier (5) peuvent être installées dans une direction d'installation (84) dans le boîtier (5).

7. Mécanisme de réglage selon l'une quelconque ou plusieurs des revendications 1 ou 4, **caractérisé en ce que** le moteur électrique (9) peut être enfiché dans le boîtier (5).

8. Mécanisme de réglage selon la revendication 4, **caractérisé en ce que** la vis sans fin transversale (21) peut être enfichée dans le boîtier (5).

9. Mécanisme de réglage selon la revendication 4, **caractérisé en ce que** le jeu axial de l'arbre de rotor (11) est amorti par le biais d'un ressort à lames (18).
